Europäisches Patentamt

European Patent Office

Office européen des brevets

(11) Veröffentlichungsnummer: **0 191 526**
**A2**

(12) # EUROPÄISCHE PATENTANMELDUNG

(21) Anmeldenummer: 86200163.3

(22) Anmeldetag: 06.02.86

(51) Int. Cl.⁴: **H 04 Q 1/442, H 04 M 19/04**

(30) Priorität: 09.02.85 DE 3504512

(43) Veröffentlichungstag der Anmeldung: 20.08.86
Patentblatt 86/34

(84) Benannte Vertragsstaaten: DE FR GB IT SE

(71) Anmelder: **Philips Patentverwaltung GmbH,
Billstrasse 80, D-2000 Hamburg 28 (DE)**

(84) Benannte Vertragsstaaten: **DE**

(71) Anmelder: **N.V. Philips' Gloeilampenfabrieken,
Groenewoudseweg 1, NL-5621 BA Eindhoven (NL)**

(84) Benannte Vertragsstaaten: **FR GB IT SE**

(72) Erfinder: **Haussmann, Erwin, Dipl.-Ing. (FH), Bayreuther
Strasse 55, D-8551 Igensdorf (DE)**

(54) **Auswerteschaltung für Wechselströme oder -spannungen.**

(57) Zur Pegel- und Frequenzauswertung von Rufsignalen in Fernmeldeanlagen sind Ruferkennungsschaltungen bekannt, welche aus einer Pegelauswerteschaltung und einer mit deren Ausgang verbundenen Frequenzauswerteschaltung bestehen.

Zur Verringerung des Schaltungsaufwands, unter gleichzeitiger Einhaltung vorgegebener Forderungen hinsichtlich detektierbaren Pegel- und Frequenzbereich, besteht die Pegelauswerteschaltung aus Schwellwertschaltern und mit diesen verbundenen Optokoppler und die Frequenzauswerteschaltung aus wenigstens zwei, in Reihe geschalteten, nachtriggerbaren, monostabilen Kippgliedern, deren Ausgänge mit einer Logikschaltung verbunden sind. Durch die Verweilzeit des zugeführten Signals in den monostabilen Kippgliedern kann auf einfache Weise maximale und minimale Frequenz des Frequenzbereichs der gültigen Frequenzen vorbestimmt werden.

Philips Patentverwaltung GmbH

N.V. Philips Gloeilampenfabrieken

0191526

PHD 85 305 EP

29.11.1985

## Auswerteschaltung für Wechselströme oder -spannungen

Die Erfindung betrifft eine Auswerteschaltung für Wechselströme oder -spannungen gemäß dem Oberbegriff des Patentanspruchs 1.

Aus der DE-OS 27 58 542 ist eine Amtsanruf-Schaltung bekannt, bei welcher der Pegel des zugeführten Rufsignals ausgewertet wird. Hierzu ist in der Amtsanruf-Schaltung eine Optokopplerschaltung vorgesehen, welche mit einer Gleichrichterbrücke und einer Parallelschaltung aus einem Widerstand und einem Kondensator verbunden ist. Durch den Optokoppler wird die galvanische Trennung der die Auswertung des empfangenen Rufsignals durchführende Schaltungsteile von den mit der Amtsleitung verbunden Schaltungsteilen erreicht. Mittels einem im Ausgangskreis des Optokopplers angeordneten Spannungsteiler wird die Schwelle des Pegels des Rufsignals festgelegt und die RC-Schaltung wird zur Siebung der gleichgerichteten Rufwechselspannung verwendet.

Die vorgenannte Amtsanruf-Schaltung weist den Nachteil auf, daß keine Unterscheidung von im Durchlaßbereich des Tiefpasses (RC-Schaltung) liegenden Frequenzen und keine Unterscheidung zwischen Wechsel- oder Gleichstrom und Wechsel- oder Gleichspannung möglich ist.

Aus der DE-OS 33 14 819 eine Ruferkennungsschaltung für eine Teilnehmerendstelle bekannt, bei welcher sowohl eine Pegel- als auch eine Frequenzauswertung des empfangenen Rufsignals durchgeführt wird. Die Pegelauswertung erfolgt

- 2 -

0191526

mittels eine Schwellenwertschalters und die Frequenzauswertung erfolgt durch Zeitdiskrimination mittels Zähler
und Hilfstakt einer Taktquelle (Frequenzerzeugung im Tonrufgeber).

Diese Ruferkennungsschaltung weist die Nachteile auf, daß
die Schaltungsanordnung für die Pegelauswertung aufwendig
ist, daß für die Frequenzauswertung ein Hilfstakt notwendig ist und daß durch Schaltflanken von Signalen am Ausgang des Schwellenwertschalters, am Zählerausgang und
Teilerausgängen Geräusche in die Teilnehmerleitung zwischen Vermittlungsstelle und Teilnehmerendstelle eingekoppelt werden.

Der Erfindung liegt die Aufgabe zugrunde, eine Auswerteschaltung anzugeben, welche einen geringen Schaltungsaufwand erfordert und kurzzeitige Störimpulse oder Längsspannungen nicht zum Auslösen weiterer Schaltvorgänge
führen.

Diese Aufgabe wird durch die im Patentanspruch 1 angegebenen Merkmale gelöst.

Die erfindungsgemäße Schaltungsanordnung weist die Vorteile auf, daß diese einen geringen Leistungsverbrauch
aufweist, daß die der Auswerteschaltung nachgeordneten
Schaltungsteile von der Leitung (Amtsleitung, Teilnehmerleitung) galvanisch getrennt sind, daß kein Hilfstakt erforderlich ist und daß Längsspannungen auf der Leitung
nicht zu Fehlauswertung führen. Durch die Verwendung von
monostabilen Kippgliedern in der Frequenzauswerteschaltung ist durch Veränderung der Verweilzeit eine einfache
Anpassung für verschiedene Anwendungsfälle, z.B. zur FSK-
Demodulation, möglich.

Werden gemäß Patentanspruch 2 als Schwellwertschalter gegeneinander geschaltete Zenerdioden verwendet, so ist eine einfache Veränderung der positiven oder negativen Schwellenspannung durch Verwendung von Zenerdioden mit anderer Zenerspannung möglich.

Die Ausführungsform der Auswerteschaltung gemäß Patentanspruch 3 weist den Vorteil auf, daß der Störabstand zwischen Nutz- und Störpegel vergrößert ist.

Besteht die Logikschaltung gemäß Patentanspruch 5 aus einem Und-Gatter und einem mit diesem verbundenen monostabilen Kippglied so können kurzzeitige Spannungseinbrüche des Ausgangssignals des Und-Gatters unterdrückt werden.

Besteht das Und-Gatter gemäß Patentanspruch 6 aus zwei parallel geschalteten Dioden so wird auf einfache Art und Weise eine Entkopplung der Ausgänge der monostabilen Kippglieder erreicht.

Die Erfindung wird im folgenden anhand in der Zeichnung dargestellter Ausführungsformen näher beschrieben und erläutert. Es zeigt:

Fig. 1 eine erste Ausführungsform und

Fig. 2 eine zweite Ausführungsform der erfindungsgemäßen Auswerteschaltung.

Fig. 3 den zeitlichen Verlauf der in der erfindungsgemäßen Auswerteschaltung auftretenden Signale.

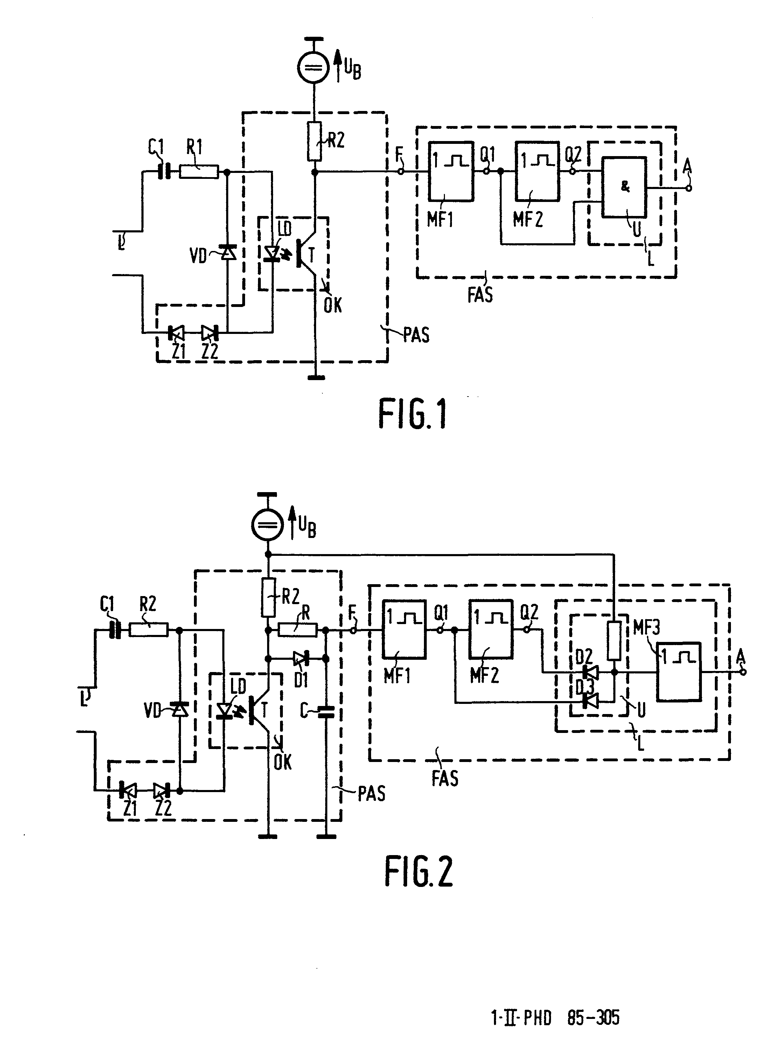

In Fig. 1 ist eine erste Ausführungsform der erfindungsgemäßen Auswerteschaltung dargestellt. Wird die Auswerteschaltung zur Pegel- und Frequenzauswertung von Rufsignalen in Fernmeldeanlagen eingesetzt, so kann mittels dieser festgestellt werden, ob für einen anstehenden Amtsanruf die vorgegebenen Pegel- und Frequenzbereiche eingehalten werden oder nicht.

Das über eine Leitung L zugeführte Rufsignal wird einer Pegelauswerteschaltung PAS zugeführt, deren Ausgang F mit einer Frequenzauswerteschaltung FAS verbunden ist. In Fernmeldeanlagen, insbesondere in Nebenstellenanlagen, wird die Teilnehmerendstelle über die Teilnehmerleitung L mit Gleichstrom ferngespeist und in der Zentrale wird diesem Gleichstrom der Rufwechselstrom überlagert. Mittels eines Kondensators C1 erfolgt die Gleichstromabtrennung des Speisegleichstroms. Die Serienschaltung aus diesem Kondensator C1 und einem Widerstand R1 ist in einer Ader, z.B. a-Ader, der Teilnehmerleitung L angeordnet. Mittels des Widerstands R1 wird eine Strombegrenzung im Kurzschlußfall der Teilnehmerleitung L erreicht. Mit einem Anschluß des Widerstands R1 ist die Katode einer Diode VD verbunden, deren Anode mit der Katode zweier gegeneinandergeschalteter Zenerdioden Z1, Z2 verbunden ist. Die Diode VD dient als Verpolungsschutz für die Auswerteschaltung.

Die Pegelauswertung in der Pegelauswerteschaltung PAS erfolgt durch Schwellwertvorgabe mittels Schwellwertschalter, insbesondere Zenerdioden Z1, Z2. Beim Überschreiten der positiven oder negativen Schwellwertspannung wird eine Leuchtdiode LD in einem Optokoppler OK angesteuert. Die Leuchtdiode LD des Optokopplers OK ist parallel zur Diode VD geschaltet und wirkt auf die Basis eines Transistors T im Optokoppler OK ein. Die Anschlüsse des Transistors T in dessen Ausgangskreis sind einerseits mit Bezugspotential andererseits über einen Widerstand R2 mit einem Anschluß einer Gleichspannungsquelle mit der Versorgungsspannung $U_B$ verbunden. Mittels dem Widerstand R2, welcher einen hohen Widerstandswert aufweist, wird der Arbeitspunkt des Transistors T vorgegeben. Ein Anschluß des Widerstands R2 ist mit dem Ausgang F der Pegelauswerteschaltung PAS verbunden.

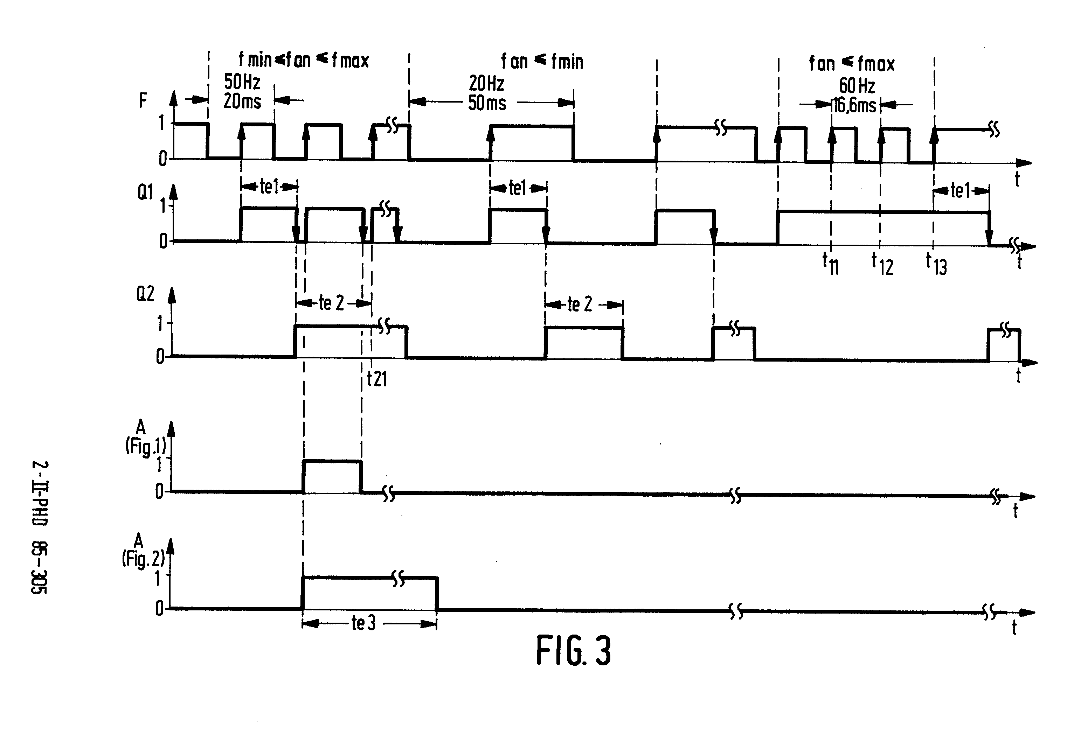

Die Frequenzauswerteschaltung FAS besteht aus wenigstens zwei, in Reihe geschalteten, nachtriggerbaren monostabilen Kippgliedern MF1, MF2. Mittels der beiden monostabilen Kippgliedern MF1, MF2 erfolgt die Auswertung der Periodendauer der Eingangsfrequenz fan (Fig. 3). Die Verweilzeit te1 des ersten monostabilen Kippglieds MF1 bestimmt die maximale Frequenz fmax und die Verweilzeit te2 des zweiten monostabilen Kippglieds MF2 die minimale Frequenz fmin der im Frequenzbereich der gültigen Frequenzen liegenden Frequenzen (Fig. 3). Die Ausgänge Q1 und Q2 der monostabilen Kippglieder MF1 und MF2 sind mit einer Logikschaltung L verbunden. Im einfachsten Fall werden die Ausgangssignale an den Ausgängen Q1 und Q2 in der Logikschaltung L mittels einem Und-Gatter U miteinander verknüpft. Am Ausgang A der Pegelauswerteschaltung FAS ist ein Signal mit der Information darüber abgreifbar, ob das zugeführte Rufsignal innerhalb des vorgegebenen Pegel- und Frequenzbereichs liegt.

Die Funktionsweise der vorstehend beschriebenen Schaltungsanordnung gemäß Fig. 1 wird im folgenden anhand des zeitlichen Verlaufs der in der erfindungsgemäßen Auswerteschaltung auftretenden Signale, welche in Fig. 3 dargestellt sind, erläutert.

Die ansteigende Flanke des Signals am Ausgang F triggert das erste monostabile Kippglied MF1. Die Verweilzeit te1 während der am Ausgang Q1 des ersten monostabilen Kippglieds MF1 der Logisch-1-Zustand abgreifbar ist, entspricht der Periodendauer der maximalen Frequenz fmax, welche noch als gültig erkannt werden soll, d.h. es gilt folgende Gleichung:

$$te1 = \frac{1}{fmax}$$

Das zweite monostabile Kippglied MF2, welches mit dem Ausgang Q1 des ersten monostabilen Kippglieds MF1 verbunden ist, wird durch die fallende Flanke des Ausgangssignals des ersten monostabilen Kippglieds MF1 getriggert. Die Verweilzeit te2 des zweiten monostabilen Kippglieds MF2 ergibt sich gemäß der folgenden Gleichung zu:

$$te2 = \frac{1}{fmin} - te1$$

Für die Eingangsfrequenz fan lassen sich drei Fälle voneinander unterscheiden.

1. Die Eingangsfrequenz fan ist kleiner als fmin.

Das durch die ansteigende Flanke des Signals am Ausgang F der Pegelauswerteschaltung PAS getriggerte erste monostabile Kippglied MF1 ändert nach Ablauf der Verweilzeit te1 den logischen Kennzustand von Logisch-1-Zustand nach Logisch-0-Zustand. Durch diesen Zustandswechsel wird das zweite monostabile Kippglied MF2 getriggert. Da während der Verweilzeit te2 des zweiten monostabilen Kippglieds MF2 von dem ersten monostabilen Kippglied MF1 kein weiteres Auslöse- oder Triggersignal kommt, ändert das Signal am Ausgang A der Frequenzauswerteschaltung FAS seinen Logisch-0-Zustand nach Ablauf der Verweilzeit te2 nicht mehr.

2. Die Eingangsfrequenz fan liegt im Frequenzbereich

$$fmin \leqq fan \lessdot fmax$$

Durch die abfallende Flanke des Signals am Ausgang Q1 des ersten monostabilen Kippglieds MF1 wird das zweite monostabile Kippglied MF2 erstmalig und während der Verweilzeit te2 des zweiten monostabilen Kippglieds MF2, während der das Signal am Ausgang Q2 den Logisch-1-Zustand aufweist, wird das zweiten monostabile Kippglied MF2 erneut getriggert. Der Zeitpunkt, zu welchem das zweite monostabile Kippglied MF2 retriggert wird ist in Fig. 3 mit $t_{21}$ angegeben. Durch die Verknüpfung der Signale an den Ausgängen Q1 und Q2 der beiden monostabilen Kippglieder MF1 und MF2 ändert das Signal am Ausgang A der Frequenzauswerteschaltung FAS seinen logischen Kennzustand von Logisch-0-Zustand in Logisch-1-Zustand. Durch diesen Zustandswechsel wird angezeigt, daß die Eingangfrequenz fan innerhalb des vorgegebenen Frequenzbereichs liegt.

Enthält, wie in Fig. 2 dargstellt, die Logikschaltung L ein drittes monostabiles Kippglied MF3, welches mit dem Ausgang des Und-Gatters U verbunden ist, so können kurzzeitige Spannungseinbrüche im Ausgangssignal des Und-Gatters U unterdrückt werden. Das dritte monostabile Kippglied MF3 wird beim Auftreten des Logisch-1-Zustands am Ausgang des Und-Gatters U getriggert, so daß an dessen Ausgang, dem Ausgang A der Frequenzauswerteschaltung FAS, ebenfalls das Ausgangssignal den Logisch-1-Zustand annimmt. Da die Verweilzeit te3 des dritten monostabilen Kippglieds MF3 so gewählt wurde, daß folgende Gleichung gilt:

$$te3 \geq \frac{1}{fmin} \quad ,$$

ändert das dritte monostabile Kippglied MF3 seinen Kennzustand nicht und es entsteht ein entprelltes Signal. Anstelle des dritten monostabilen Kippglieds MF3 kann auch ein Kondensator verwendet werden.

3. Die Eingangsfrequenz fan ist größer als fmax.

Durch die ansteigenden Flanken des Signals am Ausgang F der Pegelausworteschaltung PAS wird das erste monostabile Kippglied MF2 während des Ablaufs der Verweilzeit te1 erneut getriggert, so daß der Ablauf der Verweilzeit te1 erneut gestartet wird (Zeitpunkte $t_{11}$, $t_{12}$, $t_{13}$). Das Signal am Ausgang Q1 des ersten monostabilen Kippglieds MF1 ändert seinen Logisch-1-Zustand nicht, so daß das zweite monostabile Kippglied MF2 keinen Auslöseimpuls erhält. Am Ausgang A der Ausworteschaltung (Fig. 1, Fig. 2) ist ein Signal mit dem Logisch-0-Zustand abgreifbar, wodurch angezeigt werden kann, daß die Eingangsfrequenz fan nicht innerhalb des Frequenzbereichs liegt.

Ist, wie in Fig. 2 dargestellt, zwischen Ausgang F der Pegelausworteschaltung PAS und Ausgangskreis des Optokopplers OK ein Widerstand R angeordnet, welchem eine Diode D1 parallel geschaltet ist und welcher über einen Kondensator C an Bezugspotential angelegt ist, so kann der Störabstand zwischen Nutz- und Störpegel vergrößert werden.

Die vorbeschriebene Auswerteschaltung ist bei vielen Anwendungsfällen einsetzbar, z.B. zur Detektion des Hörtons

425 Hz in einem FSK-Demodulator oder dergleichen. Da der Leistungsbedarf der erfindungsgemäßen Auswerteschaltung bei Ausführung in CMOS-Technologie gering ist, kann anstatt der Stromversorgung mittels zusätzlicher Gleichspannungsquelle auch die Stromversorgung durch Gleichrichten der anliegenden Rufwechselspannung in der Teilnehmerendstelle sichergestellt werden. In modernen Fernsprechapparaten, welche einen Microprozessor zur Steuerung von Anzeigen, Wähleinrichtung und Speicher aufweisen, kann die Funktion der Logikschaltung L auch von dem Microprozessor übernommen werden. Der Ablauf der Verweilzeiten te1, te2 und te3 der monostabilen Kippglieder MF1, MF2 und MF3 kann programmtechnisch mittels dem Microprozessor realisiert werden.

0191526

Philips Patentverwaltung GmbH      PHD 85 305 EP

N.V. Philips' Gloeilampenfabrieken      29.11.1985

Patentansprüche

1. Auswerteschaltung für Wechselströme oder -spannungen, insbesondere zur Pegel- und Frequenzauswertung von Rufsignalen in Fernmeldeanlagen, bei der das Rufsignal einer Pegelauswerteschaltung (PAS) zugeführt wird, deren Ausgang (F) mit einer Frequenzauswerteschaltung (FAS) verbunden ist, dadurch gekennzeichnet, daß die Pegelauswerteschaltung (PAS) aus Schwellwertschaltern (Z1,Z2) und mit diesen verbundenen Optokoppler (OK) besteht, daß die Frequenzauswerteschaltung (FAS) aus wenigstens zwei, in Reihe geschalteten, nachtriggerbaren, monostabilen Kippgliedern (MF1, MF2) besteht, wobei die Verweilzeit (te1) des ersten monostabilen Kippglieds (MF1) die maximale Frequenz (fmax) und die Verweilzeit (te2) des zweiten monostabilen Kippglieds (MF2) die minimale Frequenz (fmin) im Frequenzbereich der gültigen Frequenzen liegenden Frequenzen bestimmt und daß die Ausgänge (Q1, Q2) der monostabilen Kippglieder (MF1, MF2) mit einer Logikschaltung (L) verbunden sind, an deren Ausgang (A) das Ausgangssignal der Auswerteschaltung abgreifbar ist.

2. Auswerteschaltung nach Anspruch 1, dadurch gekennzeichnet, daß als Schwellwertschalter (Z1, Z2) zwei gegeneinander geschaltete Zenerdioden (Z1, Z2) verwendet werden, welche in einer Ader (z.B. a-Ader) einer Leitung (L) der Fernmeldeanlage angeordnet und mit einer Leuchtdiode (LD) des Optokopplers (OK) verbunden sind.

3. Auswerteschaltung nach Anspruch 2, <u>dadurch gekenn-</u><u>zeichnet</u>, daß zwischen Ausgang (F) der Pegelauswerteschaltung (PAS) und Ausgangskreis des Optokopplers (OK) ein Widerstand (R) angeordnet ist, welchem eine Diode (D1) parallel geschaltet ist und welcher über einen Kondensator (C) an Bezugspotential angelegt ist.

4. Auswerteschaltung nach Anspruch 1, <u>dadurch gekenn-</u><u>zeichnet</u>, daß die Logikschaltung (L) aus einem Und-Gatter (U) besteht.

5. Auswerteschaltung nach Anspruch 1, <u>dadurch gekenn-</u><u>zeichnet</u>, daß die Logikschaltung (L) aus einem Und-Gatter (U) und einem mit dessen Ausgang verbundenen dritten monostabilen Kippglieds (MF3) besteht.

6. Auswerteschaltung nach Anspruch 4, <u>dadurch gekenn-</u><u>zeichnet</u>, daß das Und-Gatter (U) aus zwei parallel geschalteten Dioden (D2, D3) besteht, deren Anoden miteinander und deren Katoden mit den Ausgängen (Q1, Q2) der monostabilen Kippglieder (MF1, MF2) verbunden sind.

FIG.1

FIG.2

FIG.3